# EUROPEAN PATENT APPLICATION

(11) **EP 3 322 254 A1**
(43) Date of publication of application: **16.05.2018**
(21) Application number: 17197890.1
(22) Date of filing: 24.10.2017
(51) Int. Cl.: H04W 76/32

(54) **CONNECTION CONTROL FOR DUAL CONNECTIVITY AND INTERWORKING IN WIRELESS NETWORKS**

(30) Priority: 11.11.2016 IN 201641038610
(71) Applicant: Nokia Technologies Oy, 02610 Espoo (FI)
(72) Inventor: SELVAGANAPATHY, Srinivasan, 560117 Bangalore (IN); CHIBA, Tsunehiko, Saitama, 339-0042 (JP)
(74) Representative: Nokia EPO representatives

(57) **Abstract**

Connection control for dual connectivity and interworking may be used in various wireless networks to improve the performance. According to an example aspect of the present invention, a method comprises detecting, by a first base station, inactivity of a user equipment. The method also comprises transmitting to a second base station, by the first base station, a release message comprising at least one tunnel identifier associated with the user equipment upon detecting inactivity.

## Description

### TECHNICAL FIELD

The present application relates generally to connection control, such as, for example, to connection control for dual connectivity and interworking in wireless networks.

### BACKGROUND

Embodiments of the invention generally relate to wireless or mobile communications networks, such as, but not limited to, the Global System for Mobile Communications, GSM, Wideband Code Division Multiple Access, WCDMA, Long Term Evolution, LTE, and/or 5G radio access technology, which may also be called as new radio access technology, NR.

Since its inception, LTE has seen extensive deployment in a wide variety of contexts involving the communication of data and 3^{rd} Generation Partnership Project, 3GPP, still develops LTE. Similarly, 3GPP also develops the standard for 5G/NR. The goal of the 3GPP is, in general, to further develop and improve wireless cellular systems. This may be achieved, for example, by reducing signaling overhead and latency of communication. At the same time it may be important to minimize the power consumption of wireless devices as well.

One of the topics in the 3GPP discussions related to LTE and 5G/NR is dual connectivity, which can be used to improve the performance. Interworking between LTE and 5G may similarly provide improved performance. Another topic is light connection, which can be exploited to reduce signalling overhead and latency as well as power consumption.

Such enhancements may also be employed in other wireless cellular systems such as GSM and WCDMA for example. In addition to different wireless cellular systems, these enhancements may be utilized in relation to, or in combination with, several other wireless systems, such as, Wireless Local Area Network, WLAN, and Worldwide Interoperability for Microwave Access, WiMAX, systems as well.

### BRIEF DESCRIPTION OF THE DRAWINGS

For a more complete understanding of example embodiments of the present invention, reference is now made to the following descriptions taken in connection with the accompanying drawings in which:
Fig. 1 illustrates an example of a network architecture according to some example embodiments of the invention.
Fig. 2 illustrates an example of signaling according to some example embodiments of the invention.
Fig. 3 illustrates an example of signaling according to some example embodiments of the invention.
Fig. 4 illustrates a flowchart of a method in accordance with at least some example embodiments of the invention.
Fig. 5 illustrates a flowchart of a method in accordance with at least some example embodiments of the invention.
Fig. 6 illustrates a flowchart of a method in accordance with at least some example embodiments of the invention.
Fig. 7 illustrates an apparatus according to at least some example embodiments of the invention.

### DETAILED DESCRIPTION

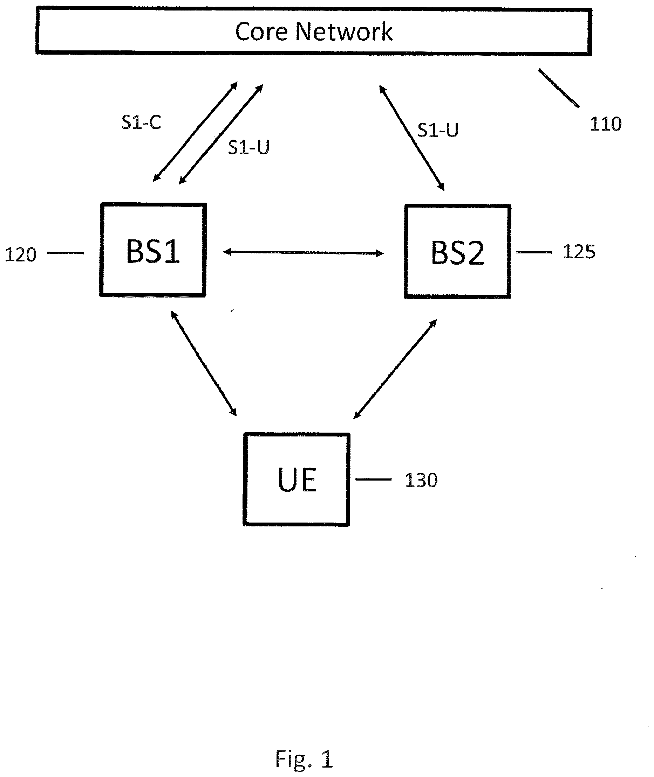

Fig. 1 represents an example of a network architecture according to some example embodiments of the invention. The present invention is described in the context of this architecture, but may be employed in any suitable alternative network architecture.

A network may comprise a core network, two or more base stations, BSs, and at least one user equipment, UE. Fig. 1 illustrates a scenario, wherein a first BS (120) is connected to the core network (110). In some embodiments the core network (110) may comprise an Evolved Packet Core, EPC. In the scenario of Fig. 1 there may be a S1-control plane (S1-C) and a S1-user plane (S1-U) connection between the first BS (120) and the core network (110). In addition, a second BS (125) may be connected to the first BS (120) and to the core network (110). There may be a S1-U connection between the second BS (125) and the core network (110) as well. In some embodiments of the invention, a UE (130) may be connectable to both, the first BS (120) and the second BS (125), simultaneously.

In case of dual connectivity, UEs may receive data simultaneously from different base stations which improves the performance. Dual connectivity may be exploited using the same technology, for example LTE, or in heterogeneous networks using interworking of two different technologies, for example LTE and 5G. In general, in dual connectivity user plane data is first transmitted to a Master eNB, MeNB, from the core network. The MeNB may then split the data so that a first part of the data is sent from the MeNB directly to a UE. Second part of the data may be then forwarded to a Secondary eNB, SeNB, to be further transmitted to the UE. The MeNB may be connected to a Primary Gateway, PGW, while the SeNB may be connected to a Secondary Gateway, SGW. In the example of Fig. 1 both, the PGW and the SGW, may be located in the core network.

Referring to Fig. 1 again, in case of dual connectivity the first BS (120) may be a MeNB while in case of interworking between LTE and 5G the first BS (120) may be an LTE eNB or 5G NodeB. Similarly, in the context of dual connectivity the second BS (125) may be a SeNB while in case of interworking between LTE and 5G the second BS (125) may be a 5G NodeB or LTE eNB, respectively. Nevertheless, the present invention is not restricted to any specific definition of the BSs, that is, a person skilled in the art will understand how to apply the invention in different wireless systems that may have various names for the first and the second BSs.

Light connection comprises a Radio Resource Control, RRC, state termed a RRC-INACTIVE state. In the RRC-INACTIVE state, an RRC connection of a UE may be released while the UE context and a S1 connection with the EPC may be maintained for the UE. The light connection feature may be exploited together with dual connectivity and/or interworking.

If dual connectivity, or any other similar technology, is used together with light connection, there may not be any update to the EPC when the UE is moved from a first RRC state to a second RRC state, for example, when the UE is moved from the RRC-CONNECTED state to the RRC-INACTIVE state. Such a transition may be performed by a MeNB in case of dual connectivity, for example, when there exists at least one bearer configured in a SeNB. In some embodiments, the at least one bearer configured in the SeNB may be a split bearer or a SCG bearer. In case of the split bearer, the S1-U may be terminated in the MeNB but Packet Data Convergence Protocol, PDCP, packets are routed via the SeNB. In case of the SCG bearer, the S1-U may be terminated in the SeNB. The EPC may maintain both, the S1-C and the S1-U, contexts when the transition takes place. The MeNB may inform the SeNB about the transition by transmitting a Secondary Cell Group SCG release message to the SeNB so that the SeNB is aware of the situation. The reception of the SCG release message may trigger the SeNB to release all associated data bearers due to the end of a data service.

After the transition, a downlink packet may arrive to the SGW. The downlink packet may map to a SCG and a tunnel endpoint of the downlink packet may further map to the SeNB. In that case the downlink packet would be dropped at the SeNB due to the release of the associated data bearers. Therefore the SeNB would not even initiate a paging message towards a UE. The challenge is thus how to ensure connectivity in such a situation so that the UE can receive the downlink packet. At the same time it would be desirable to minimize signaling overhead. One of the benefits of the present invention is that S1 signaling at the time of the transition to RRC-CONNECTED state may be avoided.

The following provides examples in accordance with embodiments of the invention of how this could be achieved. Certain embodiments of the invention may comprise moving a UE from one RRC state to another, for example, moving a UE from the RRC-CONNECTED state to the RRC-INACTIVE state. The reason for the move may be that inactivity is detected by a MeNB. The MeNB may detect inactivity, for example, by noticing that all MCG and SCG bearers are inactive for the UE which is in the RRC-CONNECTED state.

Upon detecting inactivity the MeNB may transmit a release message to the SeNB. The release message may comprise an indication that the UE has been moved to the RRC-INACTIVE state. In addition, or alternatively, the release message may comprise a tunnel identifier for each SCG bearer. In some embodiments the release message may be a SCG Release message. Moreover, in some embodiments the tunnel identifier may be a forwarding Tunnel Endpoint Identifier, TEID. The SeNB may release a connection with the UE once it has received the release message.

The SGW may receive a downlink packet after the connection between the SeNB and the UE has been released. The downlink packet may be mapped to a SCG bearer and it may be associated with the UE. The mapping to the SCG bearer may be determined, for example, based on a Traffic Flow Template, TFT, of the downlink packet. Consequently, the SGW may transmit the downlink packet to a downlink TEID of a SeNB.

The SeNB may receive the downlink packet from the SGW and forward it to the MeNB using the received tunnel identifier. Upon receiving the forwarded downlink packet the MeNB may send a paging message to the UE. The paging message may be a Radio Paging message. In some embodiments the paging message may comprise an indication that the UE is required to resume dual connectivity.

In some embodiments, the decision to add the indication that the UE is required to resume dual connectivity to the paging message may be based on a Quality of Service, QoS, tag of the downlink packet. In such case the core network, or the SGW, may include the QoS tag to all downlink packets.

Moreover, in certain embodiments the SeNB may also transmit the paging message to the cells controlled by it. This may be done before forwarding the downlink packet to the MeNB. Thus additional delay related to transmitting the paging message could be avoided. In some embodiments the MeNB may indicate whether the SeNB may send a paging message to its controlled cells as part of a SCG release message. The MeNB may decide this indication based on whether the UE was redirected to small cell layer at the time of moving the UE to the RRC-INACTIVE state.

Upon receiving the paging message, the UE may perform measurements and determine a best secondary cell or base station based on the measurements before sending a RRC message to resume a RRC connection. The UE may also transmit a response message indicating the best secondary cell or base station to the MeNB in response to the paging message. In an embodiment the response message may be transmitted as a part of a RRC Resume procedure, for example, as a RRC Resume Complete message. The MeNB may then configure dual connectivity immediately after receiving the information about the best secondary cell at the end of RRC Resume procedure (or RRC Resume complete). Thus the MeNB does not have to wait for an additional measurement report and the RRC connection may be transitioned to dual connectivity immediately after the connection setup. The benefit is that the MeNB may setup dual connectivity quickly.

Alternatively, or in addition, the UE may transmit the response message via the best secondary cell or base station instead of transmitting it via the MeNB. In this embodiment the response message may comprise information related to a best MeNB so that the RRC connection may be handed over to the best MeNB. So again dual connectivity may be set up quickly upon reception of the response message.

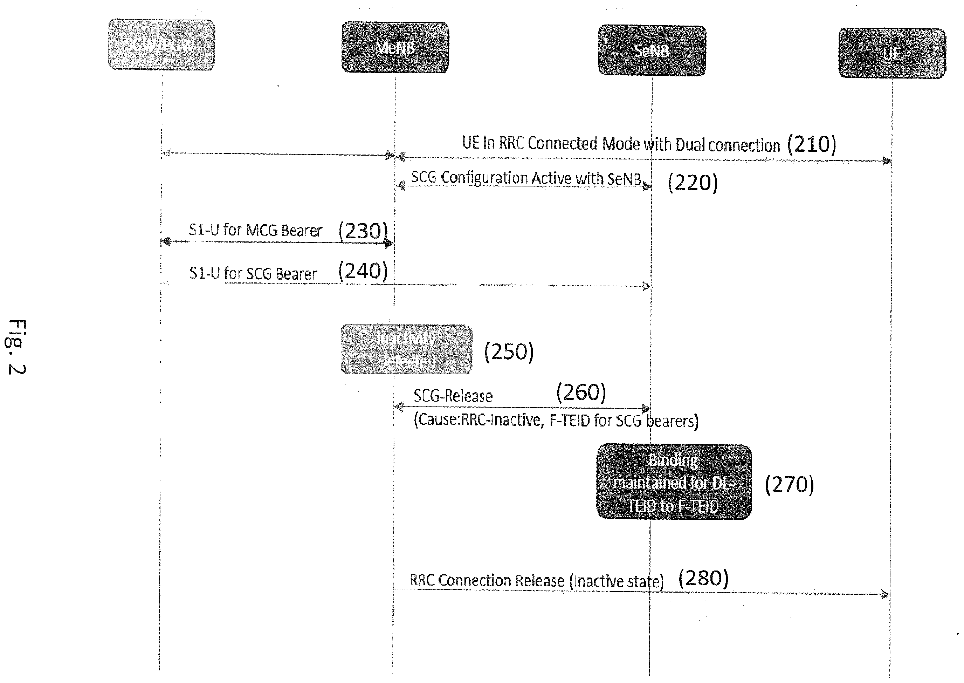

Fig. 2 represents an example of a signaling graph according to an example embodiment of the invention. This example embodiment shows the procedure when a UE may transition to RRC-INACTIVE state in case of dual connectivity. The embodiment may be implemented together with the light connection feature. In addition, the embodiment may be adapted to the context of LTE-5G interworking, instead of dual connectivity, or for any other suitable interworking of two technologies similarly as well.

According to an embodiment of the invention, a UE may be in the RRC-CONNECTED state as a starting point (210). In some embodiments the UE may be in the RRC-CONNECTED state when dual connectivity is used, i.e., the UE may be connected to a MeNB and SeNB simultaneously. In such cases a SCG bearer may be active with the SeNB (220). In some embodiments there may be a S1-U connection for a Master Cell Group, MCG, bearer between a SGW and the MeNB (230). Similarly, in some embodiments there may a S1-U connection for the SCG configuration between a SGW and the SeNB (240).

In an embodiment the MeNB may detect inactivity (250). Inactivity may be related to activity of the UE. A timer may be exploited in relation to detecting inactivity. For inactivity detection MeNB may start the timer after successfully transmitting or receiving a packet. This timer may be restarted upon reception of another packet in uplink or downlink. Inactivity may be detected when the timer expires, i.e., when there is no data activity for some time in any of the bearers related to the MeNB and the SeNB. In some embodiments inactivity may be detected when all bearers that are associated with the UE have been released. The MeNB may detect inactivity, for example, by noticing that all MCG and SCG bearers are inactive for the UE. The UE may be moved to RRC-INACTIVE state by the MeNB upon detection of inactivity. If there exists a SCG bearer when the timer expires, then the MeNB may have to transmit a release message to the SeNB for releasing the SCG bearer, for example, a SCG-Release message may be transmitted (260).

The MeNB may transmit a release message upon detecting inactivity of an UE. The release message may be used to inform the SeNB about the detected inactivity related to the UE. The release message may comprise information about the release of one or more, or all, bearers associated with the UE. The release message may be a SCG-Release message in some embodiments. Alternatively, or in addition, the release message may comprise information about the cause for releasing one or more, or all, bearers associated with the UE. In some embodiments the cause may be the move of the UE from one RRC state to another, e.g., from the RRC-CONNECTED state to the RRC-INACTIVE state.

In an embodiment the release message may comprise at least one tunnel identifier associated with the UE. The at least one tunnel identifier may be a forwarding Tunnel Endpoint Identifier (TEID). In some embodiments the at least one tunnel identifier may comprise several forwarding TEIDs, for each SCG bearer associated with the UE. The at least one tunnel identifier may be used for identifying that a received packet at the SeNB, from the SGW or the core network in general, should be forwarded to the MeNB. The SeNB may then forward the received packet using the corresponding tunnel identifier which may be in some embodiments the forwarding TEID.

In addition, or alternatively, the MeNB may also provide a downlink, DL, TEID associated with the UE to the SeNB, which may be forwarded by the SeNB to the SGW for routing packets directly. The SeNB may maintain binding between the DL and the forwarding TEIDs (270). After this, the MeNB may transmit a release message to the UE as well, to inform the UE that a connection has been released. The release message may also indicate that the UE has been moved to the RRC-INACTIVE state. In some embodiments the release message may be a RRC Connection Release message (280).

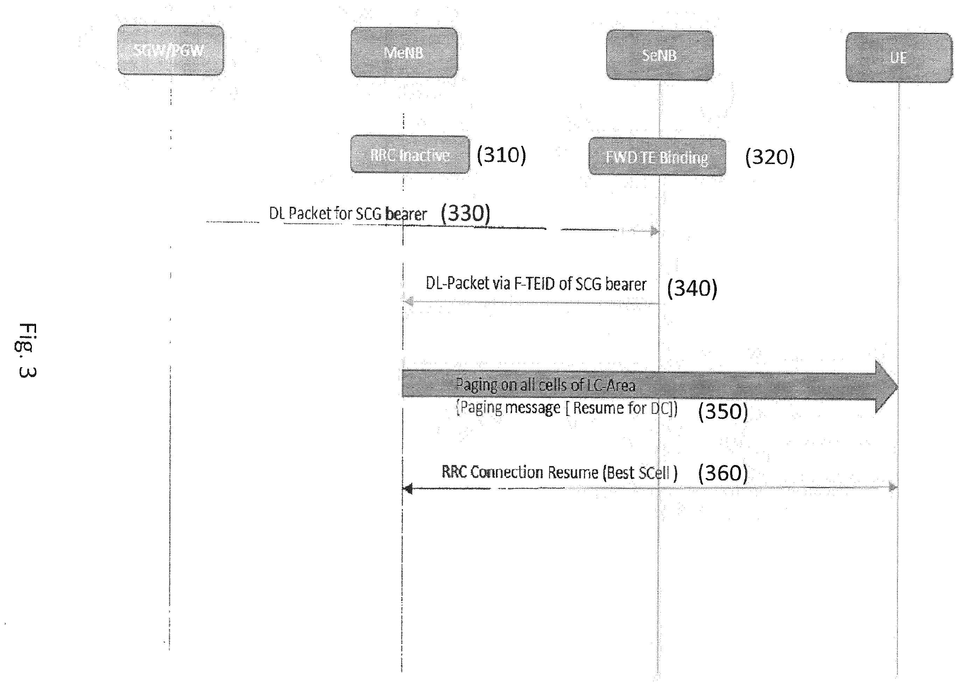

Fig. 3 represents an example of a signaling graph according to an example embodiment of the invention. This example embodiment shows the procedure when a downlink connection is to be reactivated in case of dual connectivity. The embodiment may be implemented together with the light connection feature. In addition, the embodiment may be adopted in the context of LTE-5G interworking, instead of dual connectivity, or for any other suitable interworking of two technologies.

As a starting point the UE may be in the RRC-INACTIVE (310) state and the SeNB may have stored the tunnel identifier associated with the UE (320), wherein the tunnel identifier may be in some embodiments the forwarding TEID. The SeNB may then receive a downlink packet from the SGW (330). The downlink packet may be for, or related to, a SCG bearer. Upon reception of the downlink packet the SeNB may check the destination of the packet. If the destination corresponds to the UE, the SeNB forwards the downlink packet to the MeNB using the tunnel identifier, which may comprise the forwarding TEID of the SCG bearer (340).

In an embodiment, if the SeNB is aware of the DL TEID of the MeNB, it may also provide the DL TEID to the SGW upon reception of the downlink packet. In some embodiments the DL TEID may be provided in an error message. For example, it may be provided in a GPRS Tunneling Protocol, GTP, Control packet. In some embodiment the GTP Control packet may be a GTP Error Indication, which contains the DL TEID. The SGW may then forward further downlink packets directly to the MeNB.

Upon reception of the downlink packet, the MeNB may transmit a paging message (350). The downlink packet is associated with the UE so the MeNB may page the UE in question. The paging message may be a Radio Paging message in some embodiments. In some embodiments the paging message may further comprise an indication that the UE is required to resume dual connectivity. The RRC connection between the MeNB and the UE may then be resumed (360). In addition, the RRC connection between the SeNB and the UE may be resumed as well. Alternatively, a RRC connection with a different SeNB may be established as well. In addition, in some embodiments the UE may be moved from the RRC-INACTIVE state to the RRC-CONNECTED state.

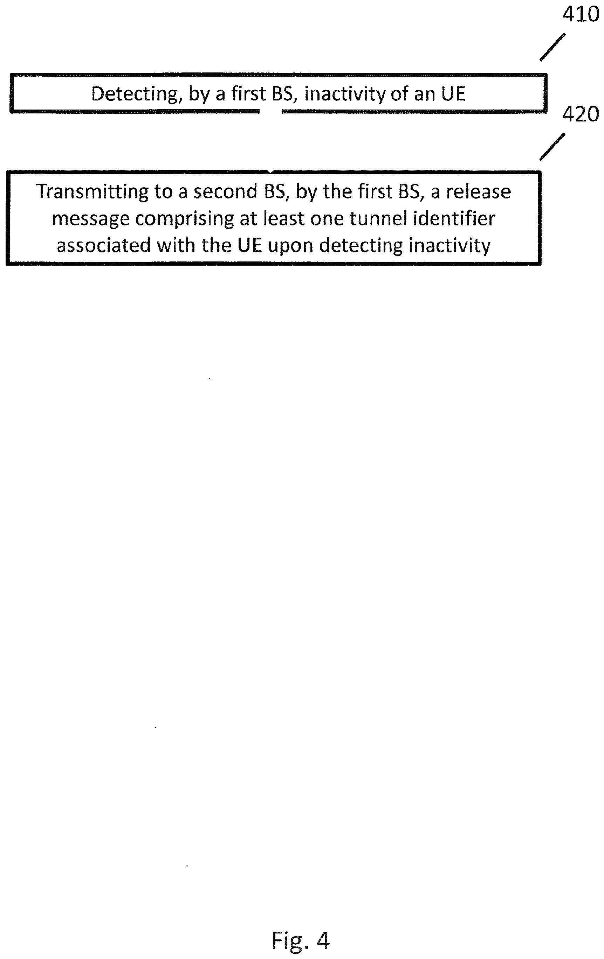

Fig. 4 depicts a flowchart of a method in accordance with at least some embodiments of the invention. The phases of the illustrated method may be performed by a first base station, for example, or a control device that is configured to control the functioning of the first base station when implanted therein. In the beginning of the process a UE may be in the RRC-CONNECTED state.

The method may include, at 410, detecting inactivity of the UE by the first BS. The method may also include, at 420, transmitting by the first BS a release message comprising at least one tunnel identifier associated with the UE to a second BS upon detection of inactivity. The at least one tunnel identifier may correspond to at least one bearer and it may be usable for forwarding downlink packets from the second BS to the first BS. In the context of dual connectivity the first BS may be a MeNB and the second BS may be a SeNB. In case of interworking the first BS may be an LTE eNB or 5G NodeB and the second BS may be a 5G NodeB or LTE eNB, respectively.

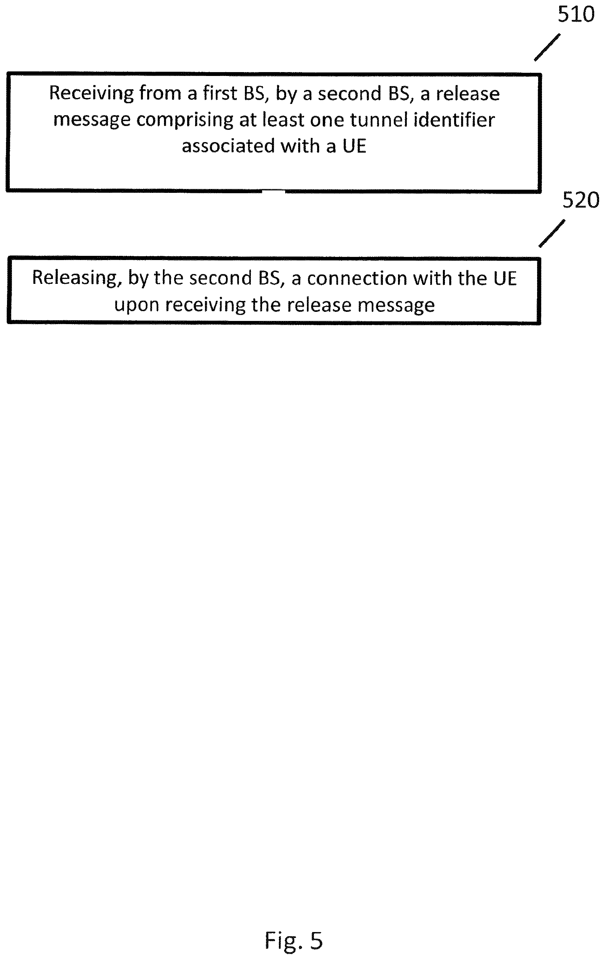

Fig. 5 depicts a flowchart of a method in accordance with at least some embodiments of the invention. The phases of the illustrated method may be performed by a second base station, for example, or a control device that is configured to control the functioning of the second base station when implanted therein.

The method may include, at 510, receiving from a first BS, by the second BS, a release message comprising at least one tunnel identifier associated with a UE. The release message may comprise an indication that the UE has been moved from one RRC state to another, for example, from the RRC-CONNECTED state to the RRC-INACTIVE state. The second BS may, at 520, release a connection with the UE upon receiving the release message. In the context of dual connectivity the first BS may be a MeNB and the second BS may be a SeNB. In case of interworking the first BS may be an LTE eNB or 5G NodeB and the second BS may be a 5G NodeB or LTE eNB, respectively.

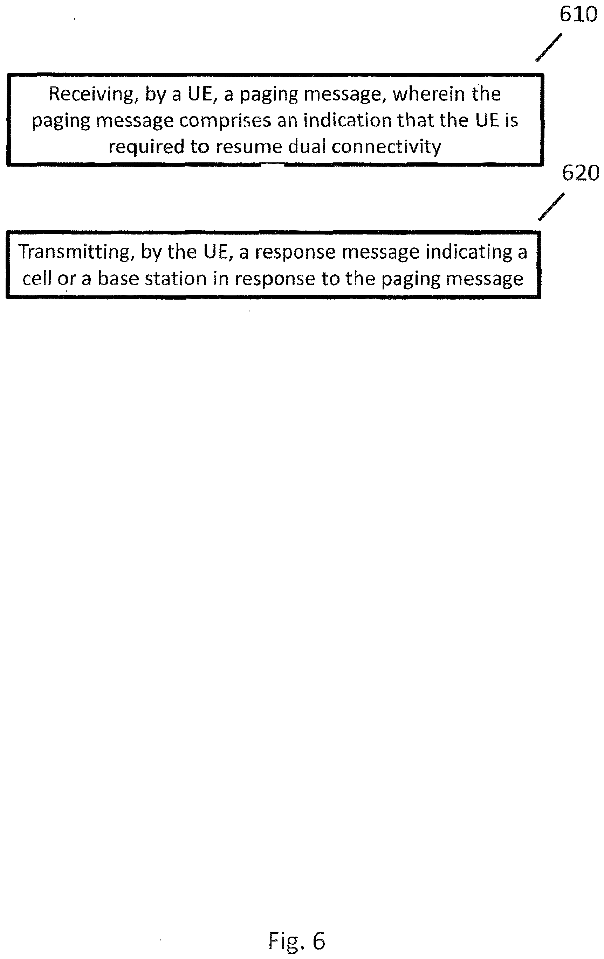

Fig. 6 depicts a flowchart of a method in accordance with at least some embodiments of the invention. The phases of the illustrated method may be performed by a user equipment, for example, or a control device that is configured to control the functioning of the user equipment when implanted therein.

The method may include, at 610, receiving, by a UE, a paging message, wherein the paging message comprises an indication that the UE is required to resume dual connectivity. The UE may, at 620, transmit a response message indicating a cell or a base station in response to the paging message.

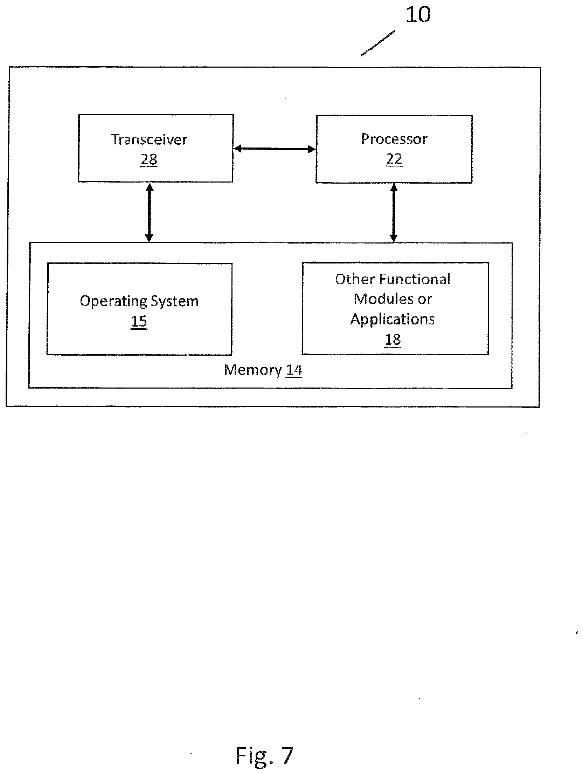

Fig. 7 illustrates an apparatus 10 according to embodiments of the invention. Apparatus 10 may be a base station, Master eNB, MeNB, Secondary eNB, SeNB, access point, software defined network, SDN, controller, cloud base station controller, or centralized base station controller, for example. In other embodiments, apparatus 10 may be a wireless device, such as a user equipment, for example.

A wireless device or user equipment may be a mobile station such as a mobile phone or smart phone or multimedia device, a computer, such as a tablet, provided with wireless communication capabilities, personal data or digital assistant, PDA, provided with wireless communication capabilities, portable media player, digital camera, pocket video camera, navigation unit provided with wireless communication capabilities or any combinations thereof. The wireless device or user equipment may be a sensor or smart meter, or other device that may usually be configured for a single location.

Apparatus 10 may comprise a processor 22 for processing information and executing instructions or operations. Processor 22 may be any type of general or specific purpose processor. While a single processor 22 is shown in Fig. 7, multiple processors may be utilized according to other embodiments. Processor 22 may also comprise one or more of general-purpose computers, special purpose computers, microprocessors, digital signal processors, DSPs, field-programmable gate arrays, FPGAs, application-specific integrated circuits, ASICs, and processors based on a multi-core processor architecture, as examples.

Apparatus 10 may further comprise a memory 14, coupled to processor 22, for storing information and instructions that may be executed by processor 22. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 14 may be comprised of any combination of random access memory, RAM, read only memory, ROM, static storage such as a magnetic or optical disk, or any other type of non-transitory machine or computer readable media. The instructions stored in memory 14 may comprise program instructions or computer program code that, when executed by processor 22, enable the apparatus 10 to perform tasks as described herein.

Apparatus 10 may also comprise one or more antennas (not shown) for transmitting and receiving signals and/or data to and from apparatus 10. Apparatus 10 may further comprise a transceiver 28 that modulates information on to a carrier waveform for transmission by the antenna(s) and demodulates information received via the antenna(s) for further processing by other elements of apparatus 10. In other embodiments, transceiver 28 may be capable of transmitting and receiving signals or data directly.

Processor 22 may perform functions associated with the operation of apparatus 10 comprising, without limitation, precoding of antenna gain/phase parameters, encoding and decoding of individual bits forming a communication message, formatting of information, and overall control of the apparatus 10, comprising processes related to management of communication resources.

In certain embodiments, memory 14 may store software modules that provide functionality when executed by processor 22. The modules may comprise an operating system 15 that provides operating system functionality for apparatus 10. The memory may also store one or more functional modules 18, such as an application or program, to provide additional functionality for apparatus 10. The components of apparatus 10 may be implemented in hardware, or as any suitable combination of hardware and software.

According to a first embodiment, a method may comprise detecting, by a first base station, inactivity of a user equipment. The method may also comprise transmitting to a second base station, by the first base station, a release message comprising at least one tunnel identifier associated with the user equipment upon detecting inactivity.

In a variant, the method may further comprise using a timer for detecting inactivity.

In a variant, the method may also comprise detecting inactivity based on detecting inactivity in all bearers related to the user equipment.

In a variant, the detecting inactivity in all bearers related to the user equipment comprises master cell group and secondary cell group bearers.

In a variant, the method may also comprise detecting inactivity based on detecting that all bearers related to the user equipment have been released.

In a variant, the method may comprise moving the user equipment from a first radio resource control state to a second radio resource control state upon detecting inactivity.

In a variant, the user equipment may be in RRC-CONNECTED state before detecting inactivity.

In a variant, the method may comprise moving the user equipment to RRC-INACTIVE state upon detecting inactivity.

In a variant, the tunnel identifier may be a forwarding tunnel endpoint identifier.

In a variant, the tunnel identifier may be usable for forwarding downlink packets after releasing a connection between the user equipment and the second base station.

In a variant, the tunnel identifier may be usable for forwarding downlink packets after releasing a connection between the second base station and the first base station.

In a variant, the at least one tunnel identifier may comprise several tunnel identifiers, wherein each tunnel identifier corresponds to a different bearer.

In a variant, the release message may comprise an indication that the user equipment has been moved to RRC-INACTIVE state.

In a variant, the release message may indicate to the second base station that a connection with the user equipment may be, or is to be, released.

In a variant, the method may further comprise receiving from the second base station, by the first base station, a downlink packet comprising the at least one tunnel identifier.

In a variant, the method further comprises transmitting a paging message to the user equipment, wherein the paging message comprises an indication that the user equipment is required to resume dual connectivity.

In a variant, the indication may be a Quality of Service tag associated with a downlink packet which triggers the paging message.

In a variant, the method further comprises receiving a response message from the user equipment, wherein the response message indicates a best secondary cell or base station.

In a variant, the first base station is a Master eNB and the second base station is a Secondary eNB.

In a variant, the first base station is an LTE eNB and the second base station is a 5G NodeB or the first base station is a 5G NodeB and the second base station is an LTE eNB.

According to a second embodiment, a method may comprise receiving from a first base station, by a second base station, a release message comprising at least one tunnel identifier associated with a user equipment. The method may also comprise releasing a connection with the user equipment upon receiving the release message.

In a variant, the method may also include storing the at least one tunnel identifier associated with the user equipment.

In a variant, the at least one tunnel identifier may be stored after releasing the connection.

In a variant, the method may further comprise receiving a downlink packet from a core network.

In a variant, the method may further comprise transmitting the downlink packet to the first base station using the at least one tunnel identifier associated with the user equipment.

In a variant, the method may include transmitting the downlink packet using the at least one tunnel identifier after releasing the connection.

In a variant, the tunnel identifier may be a forwarding tunnel endpoint identifier.

In a variant, the at least one tunnel identifier may comprise several tunnel identifiers, wherein each tunnel identifier corresponds to a different bearer.

In a variant, the method may further comprise maintaining a binding between a downlink tunnel identifier and the tunnel identifier.

In a variant, the method may further comprise transmitting the downlink tunnel identifier to the core network in response to receiving the downlink packet.

In a variant, the first base station is a Master eNB and the second base station is a Secondary eNB.

In a variant, the first base station is an LTE eNB and the second base station is a 5G NodeB or the first base station is a 5G NodeB and the second base station is an LTE eNB.

According to a third embodiment, a method may comprise receiving, by a user equipment, a paging message, wherein the paging message comprises an indication that the user equipment is required to resume dual connectivity or Quality of Service corresponds to a packet which triggers the paging message. The method may also comprise transmitting, by the user equipment, a response message indicating a cell or a base station in response to the paging message.

In a variant, the method may also comprise receiving the paging message from a first or a second base station.

In a variant, the response message may be transmitted to the first base station and it may indicate a secondary cell or a secondary base station.

In a variant, the response message may be transmitted to the second base station and it may indicate a master cell or a master base station.

In a variant, the method may comprise performing measurements to determine the cell or the base station.

In a variant, the method may also comprise performing measurements without receiving a separate request or command for performing the measurements.

In a variant, the method may comprise transmitting the response message as a part of a RRC Resume procedure.

In a variant, the response message may be a RRC Resume Request message.

In a variant, the paging message being received from a base station in response to reception of a packet tunneled from a second base station with which the user equipment has terminated all active bearers.

The described features, advantages, and characteristics of the invention may be combined in any suitable manner in one or more embodiments. One skilled in the relevant art will recognize that the invention may be practiced without one or more of the specific features or advantages of a particular embodiment. In other instances, additional features and advantages may be recognized in certain embodiments that may not be present in all embodiments of the invention.

Moreover, one having ordinary skill in the art will readily understand that the invention as discussed above may be practiced with steps in a different order, and/or with hardware elements in configurations which are different than those which are disclosed. Therefore, although the invention has been described based upon these preferred embodiments, certain modifications, variations, and alternative constructions would be apparent to those of skill in the art.

In an exemplary embodiment, an apparatus, such as a user equipment or base station, may comprise means for carrying out the embodiments described above and any combination thereof.

In an exemplary embodiment, a computer program product, embodied on a non-transitory computer readable medium, may be configured to control a processor to perform a process comprising the embodiments described above and any combination thereof

In an exemplary embodiment, an apparatus, such as a user equipment or base station, may comprise at least one processor, and at least one memory including computer program code, wherein the at least one memory and the computer program code are configured to, with the at least one processor, cause the apparatus at least to perform the embodiments described above and any combination thereof

## Claims

1. A method, comprising:
detecting, by a first base station, inactivity of a user equipment; and
transmitting to a second base station, by the first base station, a release message comprising at least one tunnel identifier associated with the user equipment upon detecting inactivity.

2. The method according to claim 1, further comprising:
using a timer for detecting inactivity.

3. The method according to claim 1 or 2, further comprising:
detecting inactivity based on detecting all bearers related to the user equipment have been released, wherein all bearers related to the user equipment comprise master cell group and secondary cell group bearers.

4. The method according to any of the preceding claims, further comprising:
moving the user equipment from a first radio resource control state to a second radio resource control state upon detecting inactivity or moving the user equipment to a RRC-INACTIVE state upon detecting inactivity.

5. The method according to any of the preceding claims, wherein the user equipment is in a RRC-CONNECTED state before detecting inactivity..

6. The method according to any of the preceding claims, wherein the at least one tunnel identifier is a forwarding tunnel endpoint identifier.

7. The method according to any of the preceding claims, wherein the at least one tunnel identifier is for forwarding downlink packets after releasing a connection between the user equipment and the second base station.

8. The method according to any of the preceding claims, wherein the release message comprises an indication that the user equipment has been moved to RRC-INACTIVE state.

9. The method according to any of the preceding claims, wherein the first base station is a Master eNB and the second base station is a Secondary eNB.

10. A method, comprising:
receiving from a first base station, by a second base station, a release message comprising at least one tunnel identifier associated with a user equipment; and
releasing a connection with the user equipment upon receiving the release message.

11. The method according to claim 10, further comprising:
receiving a downlink packet from a core network and transmitting the downlink packet to the first base station using the at least one tunnel identifier associated with the user equipment.

12. The method according to claim 10 or 11, wherein the at least one tunnel identifier is a forwarding tunnel endpoint identifier.

13. The method according to any of claims 10 to 12, further comprising:
maintaining a binding between a downlink tunnel identifier and the at least one tunnel identifier or transmitting the downlink tunnel identifier to the core network in response to receiving the downlink packet.

14. An apparatus, comprising means for performing the method according to any of claims 1-9 or 10-13.

15. A computer-readable medium encoded with instructions that, when executed by a computer, cause performance of a method according to any of claims 1-9 or 10-13.
